(19) Europäisches Patentamt
European Patent Office
Office européen des brevets

(11) EP 1 363 768 B1

(12) EUROPEAN PATENT SPECIFICATION

(45) Date of publication and mention of the grant of the patent:
**28.06.2006 Bulletin 2006/26**

(21) Application number: **02712536.8**

(22) Date of filing: **26.02.2002**

(51) Int Cl.:
***B32B 15/18** (2006.01)* ***B62D 25/10** (2006.01)*

(86) International application number:
**PCT/NL2002/000123**

(87) International publication number:
**WO 2003/004263 (16.01.2003 Gazette 2003/03)**

# (54) motor vehicle hood

Motorhaube

capot

(84) Designated Contracting States:
**AT BE CH CY DE DK ES FI FR GB GR IE IT LI LU MC NL PT SE TR**

(30) Priority: **26.02.2001 NL 1017451**

(43) Date of publication of application:
**26.11.2003 Bulletin 2003/48**

(73) Proprietor: **Nederlandse Organisatie voor Toegepast-Natuurwetenschappelijk Onderzoek TNO**
**2628 VK Delft (NL)**

(72) Inventors:
- **BOSMA, Freerk**
  **NL-2636 GE Schipluiden (NL)**
- **MORSINK, Petrus, Leonardus, Johannus**
  **NL-2631 TV Nootdorp (NL)**
- **HUIBERS, Joseph Hubert Antoon Maria**
  **5644 JB Eindhoven (NL)**

(74) Representative: **Prins, Adrianus Willem et al**
**Vereenigde,**
**P.O.Box 87930**
**2508 DH Den Haag (NL)**

(56) References cited:

| | |
|---|---|
| **EP-A- 1 147 972** | **EP-A- 1 172 282** |
| **US-A- 4 312 908** | **US-A- 4 646 494** |

- **PATENT ABSTRACTS OF JAPAN vol. 018, no. 229 (M-1598), 26 April 1994 (1994-04-26) & JP 06 023775 A (TOYOTA MOTOR CORP), 1 February 1994 (1994-02-01)**
- **PATENT ABSTRACTS OF JAPAN vol. 013, no. 388 (C-630), 28 August 1989 (1989-08-28) & JP 01 135860 A (ASAHI CORP;OTHERS: 01), 29 May 1989 (1989-05-29)**
- **BROWN R.P.: 'Handbook of Plastic Test Methods, 2nd ed., pages 121-123, 138-140, 142-148, 150, 151, 153, 154, 161-163', 1981, GEORGE GODWIN LTD, LONDON (GB)**
- **CARLOWITZ B.: 'Kunststoff-Tabellen', 3rd. ed. (1986); Carl Hanser Verlag, München; p. 106, 107, 132, 133**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 363 768 B1

## Description

The present invention relates to a motor vehicle hood containing a structural material comprising a laminate of at least a first and a second material layer.

Such a structural material is known in the prior art. The conference paper "Concept of hood design for possible reduction in pedestrian head injury" discloses a laminate, in particular suitable for forming a hood of a car. This conference paper was presented at "The 14th International Technical Conference on the Enhanced Safety of Vehicles", Munich, May 23-26, 1994.

According to the above publication it is advantageous to build up the laminate from a base material of, for instance, steel, coated at the bottom with an elastic soft foam layer.

When producing vehicles, automotive manufacturers are bound to take the so-called Head Injury Criterion (HIC) into account when designing a hood for a car. The HIC gives an indication of the injury risk as a result of the deceleration the head of a human undergoes at the moment this human is knocked down by a car and hits his head on the surface of a hood. The HIC is defined as follows:

$$HIC = \left[ \frac{1}{t_2 - t_1} \int_{t_1}^{t_2} a\,dt \right]^{2,5} (t_2 - t_1)$$

In this equation the interval $t_1$- $t_2$ forms the interval over which the deceleration of the head of a human is measured. This interval is selected such that the maximum deceleration and hence the maximum load on the head of a human is determined.

In the prior art it is known that the head of a human can undergo a very great deceleration during a short interval without permanent damage necessarily occurring in the head. After this short period with a high deceleration, however, the deceleration must revert to a much less high value. If this does not happen, the risk of injury increases.

In the prior art it is required that in every place on the hood the HIC value is lower than 1000. The equation shows that it is advantageous if the deceleration is spread over a longest possible time interval. In practice, this means that during this long time interval a hood can deform under the load on the head.

When the time interval over which the hood can deform is great, the associated deformation of a hood will also be great. Structurally, this requires a large open space between the hood and the subjacent parts of the car. It is clear that a maximum must be set on this open space. The larger this open space must be, the more unfavorable it will be to the total design of the car, for instance from the viewpoint of aerodynamics and freedom of design when designing the different engine parts.

Structurally, the ideal would be to make the hood from a material having a relatively high stiffness during the first deformation of the hood. When a head of a human hits such a hood, a great deceleration can be forced on the head for a specific time interval. Ideally, the material properties of the hood should then change to give the hood a much greater flexibility over a next time interval and to cause the deceleration of the head of a human to revert to a much less high value.

By means of the structure known from the above-discussed conference paper an attempt is made to catch the head of a human as much as possible and to direct it in the best possible manner towards the engine located under the hood. The material properties of the hood according to the above document, however, are constant during the deformation of the hood. This means that with the laminate according to the conference paper a compromise must still be sought between, on the one hand, a largest possible range over which the head can be slowed down and, on the other hand, a smallest possible range so as not to restrict the freedom of design too much when designing the car.

A layered structural material for car plating is further known from JP-A-06023775. This material is composed of a molded piece of SMC (Sheet Mold Compound) coated with a metallic foil. SMC is composed of long fibers included in a matrix material. SMC is thus a relatively tough material that, coated with metallic foil, is suitable for replacing metallic car plating parts, because this material has a relatively great stiffness.

From JP-A-01135860 it is known that a steel plate storable for a rather long time is coated, for the purpose of increasing its stiffness, with an epoxy resin containing, inter alia, SBR, NBR, IIR, a curing agent, a filling material and glass particles.

In view of above, the object of the present invention is to provide a motor vehicle hood with a structural material, in which the disadvantages of the materials according to the prior art are avoided as much as possible, that is to say in which an optimum can be obtained between the degree of deceleration and the degree of dent.

According to the invention this object is achieved if the laminate comprises a base layer of a relatively flexible material, such as, for instance, steel or aluminum, which layer is coated with a supporting layer of relatively brittle material.

For clarity's sake, it is observed that in the present text the term "brittle material" refers to a material that either breaks when exceeding a specific strain or whose stiffness strongly decreases when exceeding a specific maximum strain, e.g. a material with properties as shown in Figs. 5 and 6. This maximum strain is, for instance, the elastic limit of the material.

Through the above-mentioned measure it is ensured that the hood according to the invention has a first stiffness of relatively high value over a first deformation range. Because the material has this stiffness, it will be capable of forcing a relatively great deceleration on an object hitting it, such as, for instance the head of a human, over the first range.

At the moment a maximum strain is exceeded, either the brittle supporting material will break or its stiffness will sharply decrease. This means that after exceeding this maximum strain of the supporting material the material will show a second deformation range, in which the stiffness of the material will be lower than over the first deformation range.

Through the combination of the relatively flexible, i.e. ductile, base material and the relatively brittle supporting material it is substantially ensured during deformation of the structural material that the material properties of the structural material depend on the degree of deformation thereof.

By using the structural material in a hood according to the invention, it can be ensured that a relatively great deceleration is forced on the head of a human over a first range. When exceeding a specific deformation of a hood, the brittle material will either break or lose its stiffness. Subsequently, a much lower deceleration can be forced on the head in a second deformation range. The base layer deforms plastically, which prevents load on the head as a result of the rebound of the laminate. This means that by the hood according to the present invention the object according to the invention is substantially achieved.

According to the invention it is advantageous that the stiffness of the supporting layer strongly decreases when increasing the strain above the elastic limit of the material of the supporting layer. It is possible that this supporting material comprises BMC (Bulk Mold Compound).

Besides the above base material and the above supporting material, the structural material in the hood according to the invention may also comprise a filling layer arranged between the base layer and the supporting layer. This filling layer may, for instance, comprise PVC foam. The object of this layer is to create distance between the base layer and the supporting layer. This may also be achieved by applying a relief to the supporting material.

As stated, the structural material is used in a hood according to the invention. Hereby it is of advantage that the base layer comprises steel having a thickness of 0.6 to 2.0 mm, preferably 0.6 to 0.9 mm, most preferably 0.7 mm, or that the base layer comprises aluminum having a thickness of 1.0 to 2.0 mm, preferably 1.0 to 1.5 mm, most preferably 1.2 mm.

It is further possible that the supporting layer has a thickness of 0 to 10 mm, preferably 1 to 3 mm, most preferably 2 mm.

The supporting layer may, for instance, be made of a composite material that can be formed in a mold, which supporting layer is fixed to the base layer by means of, for instance, an epoxy glue. It is thus possible that the layer thickness of the supporting layer varies over the surface of the hood.

By varying the thickness of the supporting layer over the surface of the hood specific material characteristics can be given to specific places on the hood. That is to say in places where, for instance, the material of the base layer is bent (and is therefore less flexible) the subjacent supporting layer may be of thinner design or even be completely omitted.

As stated, it is necessary according to the prior art that in every place on the hood the HIC value is lower than 1000. That is to say that this requirement is also imposed on the transition existing between the hood and the juxtaposed wings. By integrating the wings, at least at the top thereof, with the hood it can be ensured in a single design that the HIC value is actually lower than the above value of 1000.

The invention will be described in more detail with reference to the accompanying figures, in which:

Fig. 1 shows a possible design of a hood according to the present invention;

Fig. 2 shows the building up of the structural material used in a hood according to the invention with a base layer and a supporting layer;

Fig. 3 shows the structural material used in a hood according to the invention, in which a filling layer is arranged between the supporting layer and the base layer;

Figs. 4, 5 and 6 show the ratio between the stress and the associated strain of a material that can be preferably used as supporting layer for the structural material used in a hood according to the invention;

Fig. 7 shows a possible arrangement for testing the structural material used in a hood according to the invention;

Fig. 8 shows a diagram of the properties of the structural material used in a hood according to the invention tested in the arrangement of Fig. 7; and

Figs. 9a, 9b, 9c and 9d show, in the form of diagrams, the results of tests carried out by means of the arrangement of Fig. 7.

Fig. 1 shows a hood 1, which is built up with a structural material. As will be discussed with reference to Figs. 2 and 3, the structural material of a hood 1 comprises a base layer of, for instance, steel and a supporting layer of, for instance, a composite material. The hood 1 of Fig. 1 comprises a first central part 2, which, in use, will cover the engine at the top. On both sides, the central part 2, extended by side parts 3, which, in use, will substantially extend in the vertical direction and form the wings of a car. At the edge 4 the central part 2 will connect to the windscreen of a car. In the central part holes are further provided to accommodate, for instance, a light unit.

Fig. 2 diagrammatically shows the building up of the structural material used in a hood according to the invention. The structural material comprises a base layer 10, for instance formed from steel. The steel base layer can be easily deformed and can, moreover, be finished in the conventional manner with protective layers and paint layers etc. Arranged at the bottom of this base layer is a supporting layer 11. The particular aspect of this supporting layer is that it is made of brittle material. When a force is exerted on the material 10, 11, the material will deform. Over a first deformation range the resistance to bending will be determined by the material properties of both the base layer 10 and the supporting layer 11. When a specific degree of deformation is exceeded, the brittle material will either break or lose its stiffness. That is to say that from that moment the material properties of substantially the base material 10 will determine the further resistance to bending over the deformation range.

Fig. 3 shows an alternative embodiment of the structural material used in a hood according to the invention. Besides the base material 10 and the brittle material 11, the material according to the embodiment of Fig. 3 also comprises a filling material 12. This filling material 12 is, for instance, formed by PVC foam or by means of a relief on the supporting material.

Figs. 4, 5 and 6 show the ratio between the stress and the associated strain of a material that is eminently suitable to serve as supporting material 11. The material has the code name of BMC (Bulk Mold Compound). The material contains 5 wt.% glass fibers having a length of 6 mm. The material further contains a considerable amount of mineral (lime). The density of the material is 1800. The material has a yield stress of 34 MPa. Fig. 4 shows that when the stress exerted on the material exceeds the yield stress, the stiffness of the material sharply decreases.

Fig. 5 shows a picture similar to that of Fig. 4. The yield point of the material is at 34 MPa. The associated deformation is, for instance, 0.31%. The specific strength depends on the selected material thickness.

Fig. 6 shows the behavior of the material under compression stress.

Applicant conducted experiments with the structural material used in a hood according to the invention. The arrangement used by applicant is drawn in Fig. 7. Fig. 7 shows a so-called impact tester 30. The impact tester 30 comprises frame 31, in which a test piece can be clamped. The tester further comprises a so-called "head form". This head form is a freely moving mass having a weight of 4.8 kg, imitating the head of an adult human. The arrangement used by applicant corresponds to the requirements of the European Enhanced Vehicle Safety Committee Working Group 17. The head form 32 is moved in the direction of the test piece 35 by means of a cylinder 33. The speed at which this occurs is 11.1 m/s. A survey of the tests conducted by applicant is contained in Table 1 below.

Table 1

| Test number | Material layer thickness (mm) | Impactor speed (m/s) | Maximum head form acceleration (m/s$^2$) | Maximum head form displacement (mm) | HIC |
|---|---|---|---|---|---|
| CL001122 | 0.7 Steel/<br>20 PUR /<br>0.7 Steel | 8.54 | 1700 | 33 | 775 |
| CL001123 | Idem | 11.45 | 2440 | 50 | 1184 |
| CL001124 | Idem | 11.36 | 2340 | 46 | 1274 |
| CL001125 | 0.7 Steel/<br>20 cell rubber/<br>0.7 Steel | 11.32 | 2220 | 60 | 828 |
| CL001126 | Idem | 11.45 | 2110 | 70 | 646 |
| CL001127 | Idem | 11.29 | 2230 | 63 | 870 |
| CL001128 | 0.7 Steel/<br>5 PVC foam/<br>2 MBC | 8.67 | 2340 | 27 | 1824 |
| CL001129 | Idem | 11.44 | 2390 | 43 | 1553 |

Table continued

| Test number | Material layer thickness (mm) | Impactor speed (m/s) | Maximum head form acceleration (m/s$^2$) | Maximum head form displacement (mm) | HIC |
|---|---|---|---|---|---|
| CL001130 | Idem | 11.32 | 2890 | 44 | 1700 |
| CL001131 | 0.7 Steel/ 2 BMC | 8.59 | 1490 | 54 | 443 |
| CL001132 | Idem | 9.86 | 1660 | 66 | 670 |
| CL001133 | Idem | 11.23 | 1950 | 104 | 566 |

Fig. 8 diagrammatically shows the results of the tests conducted by means of the arrangement of Fig. 7. The dotted line indicates the profile of the deceleration of a head for the time most advantageous to a human. The full line indicates the profile that can be obtained with the material used in a hood according to the invention.

Figs. 9a, 9b, 9c and 9d further show, in the form of diagrams, the results of experiments conducted by means of the arrangement of Fig. 7. The above table shows the properties of the different material compositions tested in the experiment.

## Claims

1. A motor vehicle hood, containing a structural material, comprising a laminate of at least a first and a second material layer, the laminate comprising a base layer of a relatively flexible material, which base layer is provided with a supporting layer, **characterized in that** said supporting layer is of relatively brittle material so that, under the bending load of a head of a human hitting the hood, the structural material has a first stiffness during a first deformation range until a maximum strain in the supporting layer is exceeded, and has a second, lower stiffness during a second deformation range, thereby causing first a high deceleration, and subsequently a low deceleration, of the head in order to limit injury during impact.

2. A hood according to claim 1, **characterized in that** the stiffness of the supporting layer strongly decreases when increasing the strain above the elastic limit of the material of the supporting layer.

3. A hood according to claim 1 or 2, **characterized in that** the supporting material comprises BMC.

4. A hood according to claims 1 - 3, **characterized in that** between the base layer and the supporting layer a filling layer is arranged to increase the distance between the base layer and the supporting layer.

5. A hood according to any of the preceding claims, **characterized in that** the base layer comprises steel having a thickness of 0.6 mm to 2.0 mm, preferably 0.6 mm to 0.9 mm, most preferably 0.7 mm.

6. A hood according to any one of the preceding claims, **characterized in that** the supporting layer has a thickness of 0 to 10 mm, preferably 1 to 3 mm, most preferably 2 mm.

7. A hood according to any one of the preceding claims, **characterized in that** the layer thickness of the supporting layer varies over the surface of the vehicle body part.

8. A vehicle having a motor hood, according to any of the preceding claims.

9. A vehicle according to claim 8, wherein wings, juxtaposed the hood, are integrated, at least at the top thereof, with the motor hood.

10. Use of a structural material for making a pedestrian-safe motor vehicle hood as defined in claim 1, said structural material, comprising a laminate of at least a first and a second material layer, **characterized in that** the laminate comprises a base layer of a relatively flexible material, such as, for instance, steel or aluminum, which base layer is provided with a supporting layer of brittle material.

**Patentansprüche**

1. Fahrzeugmotorhaube mit einem Strukturmaterial, das ein Laminat aus wenigstens einer ersten und einer zweiten Materialschicht aufweist, wobei das Laminat eine Basisschicht aus einem relativ flexiblen Material aufweist, wobei die Basisschicht mit einer unterstützenden Schicht versehen ist, **dadurch gekennzeichnet, dass** die unterstützende Schicht aus relativ sprödem Material ist, so dass das Strukturmaterial unter der Biegebelastung eines auf die Haube treffenden Kopfes eines Menschen während eines ersten Deformationsbereichs eine erste Steifigkeit hat bis eine maximale Spannung in der unterstützenden Schicht überschritten wird, und eine zweite, geringere Steifigkeit während eines zweiten Deformationsbereichs hat, wodurch erst eine hohe Abbremsung und daraufhin eine niedrigere Abbremsung des Kopfes bewirkt wird, um Verletzungen während des Aufpralls zu begrenzen.

2. Fahrzeugmotorhaube nach Anspruch 1, **dadurch gekennzeichnet, dass** die Steifigkeit der unterstützenden Lage stark abnimmt, wenn die Spannung über die elastische Grenze des Materials der unterstützenden Lage ansteigt.

3. Fahrzeugmotorhaube nach Anspruch 1 oder 2, **dadurch gekennzeichnet, dass** das unterstützende Material Feuchtpressmasse (BMC - Bulk Mold Compound) aufweist.

4. Fahrzeugmotorhaube nach Ansprüchen 1 bis 3, **dadurch gekennzeichnet, dass** zwischen der Basisschicht und der unterstützenden Schicht eine Füllschicht angeordnet ist, um den Abstand zwischen der Basisschicht und der unterstützenden Schicht zu vergrößern.

5. Fahrzeugmotorhaube nach einem der vorhergehenden Ansprüche, **dadurch gekennzeichnet, dass** die Basisschicht Stahl mit einer Dicke von 0,6 mm bis 2,0 mm, vorzugsweise 0,6 mm bis 0,9 mm, besonders bevorzugt 0,7 mm, aufweist.

6. Fahrzeugmotorhaube nach einem der vorhergehenden Ansprüche, **dadurch gekennzeichnet, dass** die unterstützende Schicht eine Dicke von 0 bis 10 mm, vorzugsweise 1 bis 3 mm, besonders bevorzugt von 2 mm hat.

7. Fahrzeugmotorhaube nach einem der vorhergehenden Ansprüche, **dadurch gekennzeichnet, dass** die Schichtdicke der unterstützenden Schicht entlang der Oberfläche des Fahrzeugkarosserieteils variiert.

8. Fahrzeug mit einer Motorhaube gemäß einem der vorhergehenden Ansprüche.

9. Fahrzeug nach Anspruch 8, wobei Kotflügel, zumindest an ihrem oberen Ende, mit der Motorhaube zusammengefasst sind.

10. Verwendung eines Strukturmaterials zum Herstellen einer für Fußgänger sicheren Fahrzeugmotorhaube wie in Anspruch 1 definiert, wobei das Strukturmaterial ein Laminat aus wenigstens einer ersten und einer zweiten Materialschicht aufweist, **dadurch gekennzeichnet, dass** das Laminat eine Basisschicht aus relativ flexiblem Material, wie beispielsweise Stahl oder Aluminium, aufweist, wobei die Basisschicht mit einer unterstützenden Schicht aus sprödem Material versehen ist.

**Revendications**

1. Capot de véhicule à moteur, contenant un matériau structurel, comportant un stratifié constitué d'au moins une première et une seconde couches de matériau, le stratifié comportant une couche de base d'un matériau relativement souple, laquelle couche de base est munie d'une couche de support, **caractérisé en ce que** ladite couche de support est en un matériau relativement friable, de sorte que sous la charge de flexion d'une tête d'un humain heurtant le capot, le matériau structurel a une première rigidité pendant une première plage de déformation jusqu'à ce qu'une contrainte maximum dans la couche de support soit dépassée, et a une seconde rigidité plus faible pendant une seconde plage de déformation, provoquant ainsi premièrement une forte décélération, et ultérieurement une faible décélération de la tête afin de limiter les blessures pendant un impact.

2. Capot selon la revendication 1, **caractérisé en ce que** la rigidité de la couche de support décroît fortement lors d'une augmentation de la contrainte au delà de la limite d'élasticité du matériau de la couche de support.

3. Capot selon la revendication 1 ou 2, **caractérisé en ce que** le matériau de support comporte du prémix (BMC).

**4.** Capot selon les revendications 1 à 3, **caractérisé en ce que** entre la couche de base et la couche de support, une couche de remplissage est agencée afin d'augmenter la distance entre la couche de base et la couche de support.

**5.** Capot selon l'une quelconque des revendications précédentes, **caractérisé en ce que** la couche de base comporte un acier ayant une épaisseur de 0,6 mm à 2,0 mm, de préférence de 0,6 mm à 0,9 mm, de la manière la plus préférée de 0,7 mm.

**6.** Capot selon l'une quelconque des revendications précédentes, **caractérisé en ce que** la couche de support a une épaisseur de 0 à 10 mm, de préférence de 1 à 3 mm, de la manière la plus préférée de 2 mm.

**7.** Capot selon l'une quelconque des revendications précédentes, **caractérisé en ce que** l'épaisseur de couche de la couche de support varie sur la surface de la partie de carrosserie de véhicule.

**8.** Véhicule ayant un capot de moteur selon l'une quelconque des revendications précédentes.

**9.** Véhicule selon la revendication 8, dans lequel les ailes, juxtaposées au capot, sont intégrées au moins dans leur partie supérieure avec le capot de moteur.

**10.** Utilisation d'un matériau structurel pour fabriquer un capot de véhicule à moteur sûr pour les piétons selon la revendication 1, ledit matériau structurel comportant un stratifié constitué d'au moins une première et une seconde couches de matériau, **caractérisée en ce que** le stratifié comporte une couche de base d'un matériau relativement souple, tel que par exemple de l'acier ou de l'aluminium, laquelle couche de base est munie d'une couche de support en un matériau friable.

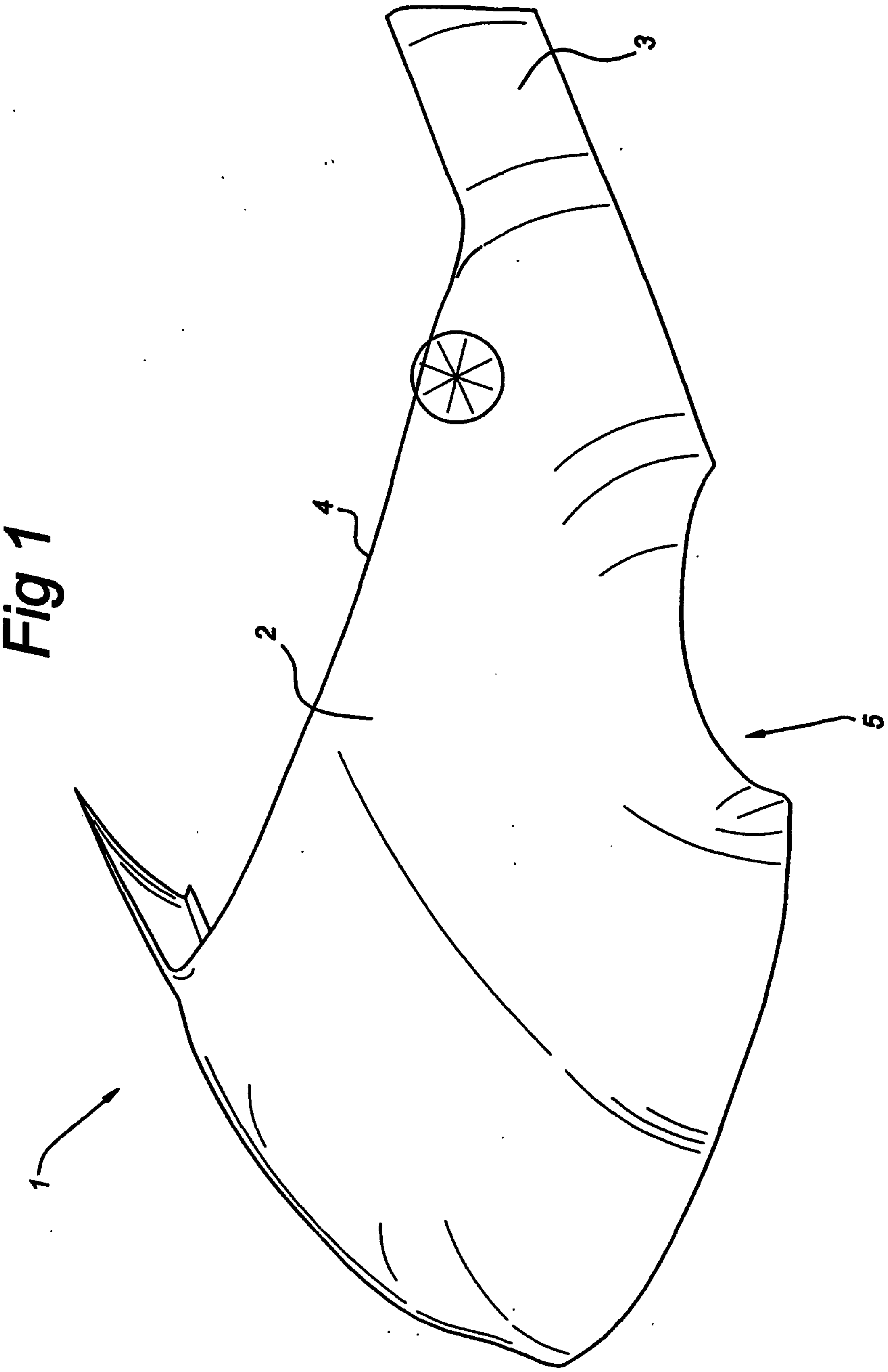


Fig 1

Fig 2

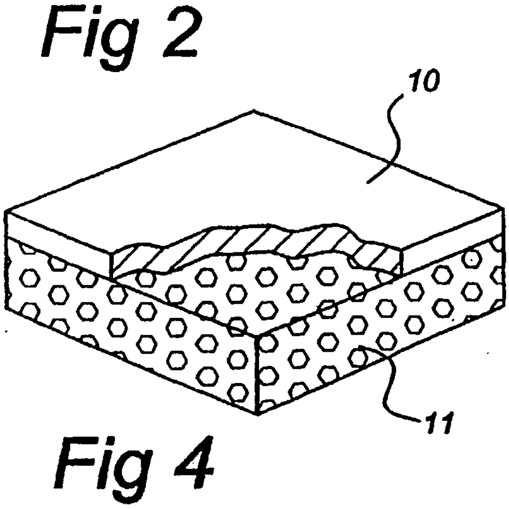


Fig 3

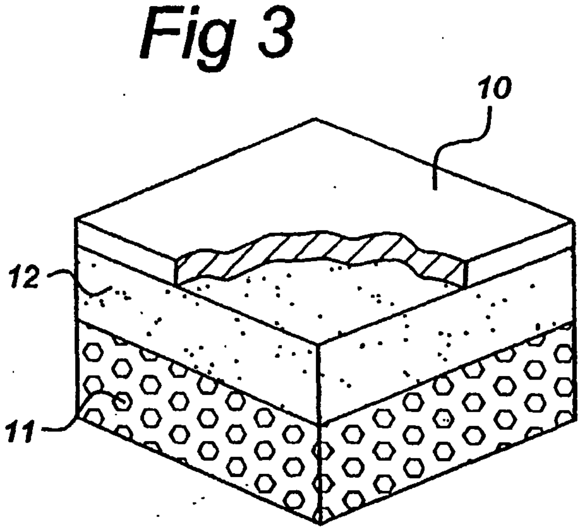


Fig 4

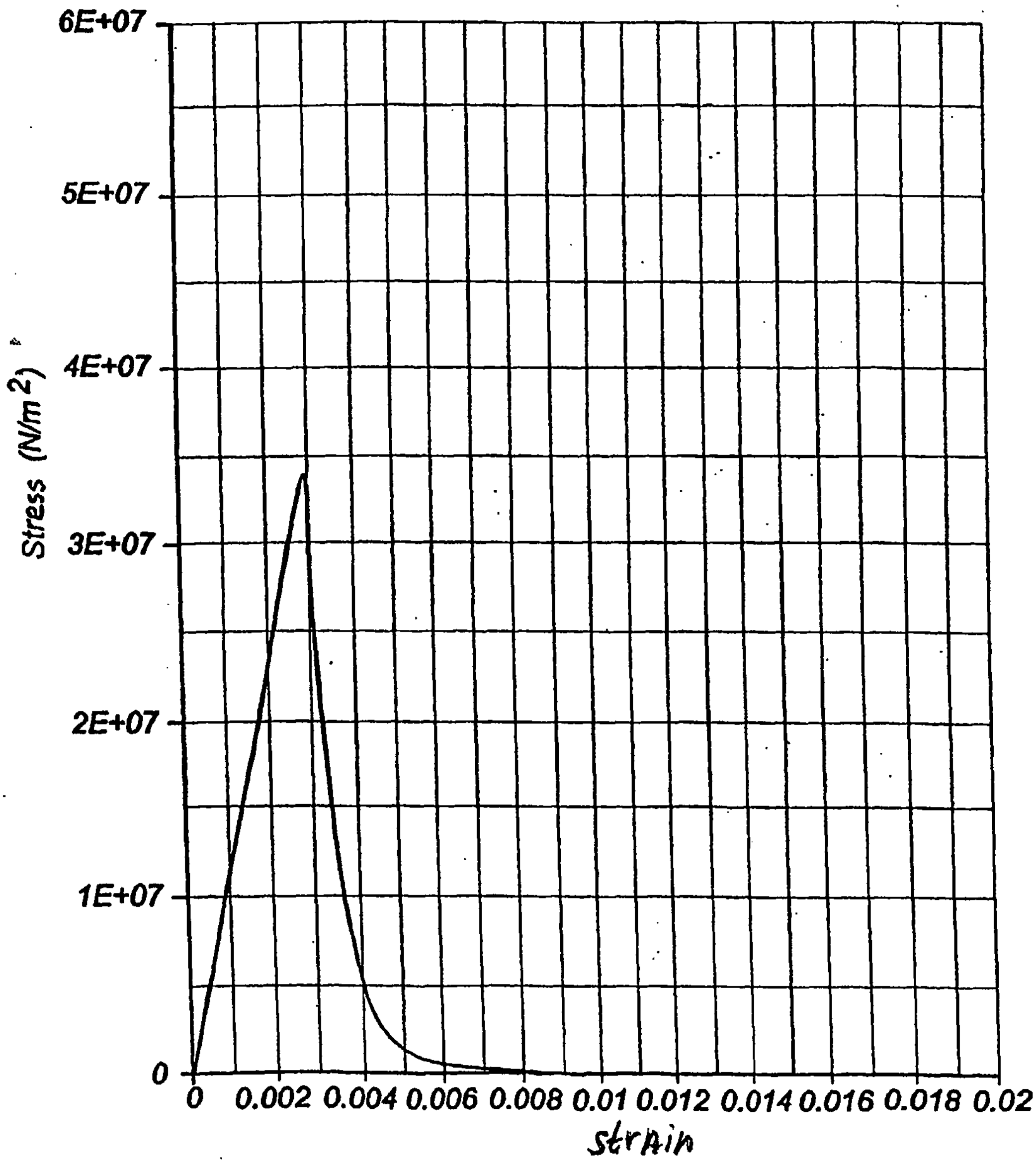

Fig 5

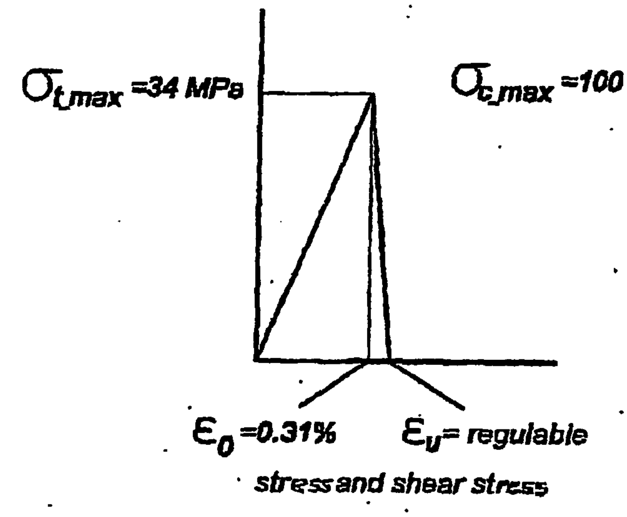


Fig 6

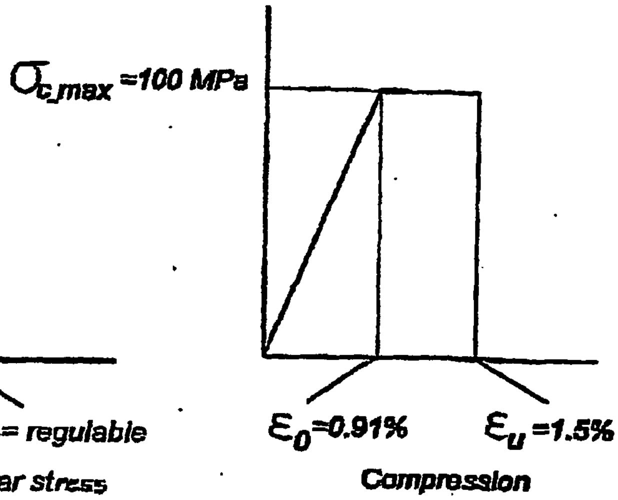


Fig 7

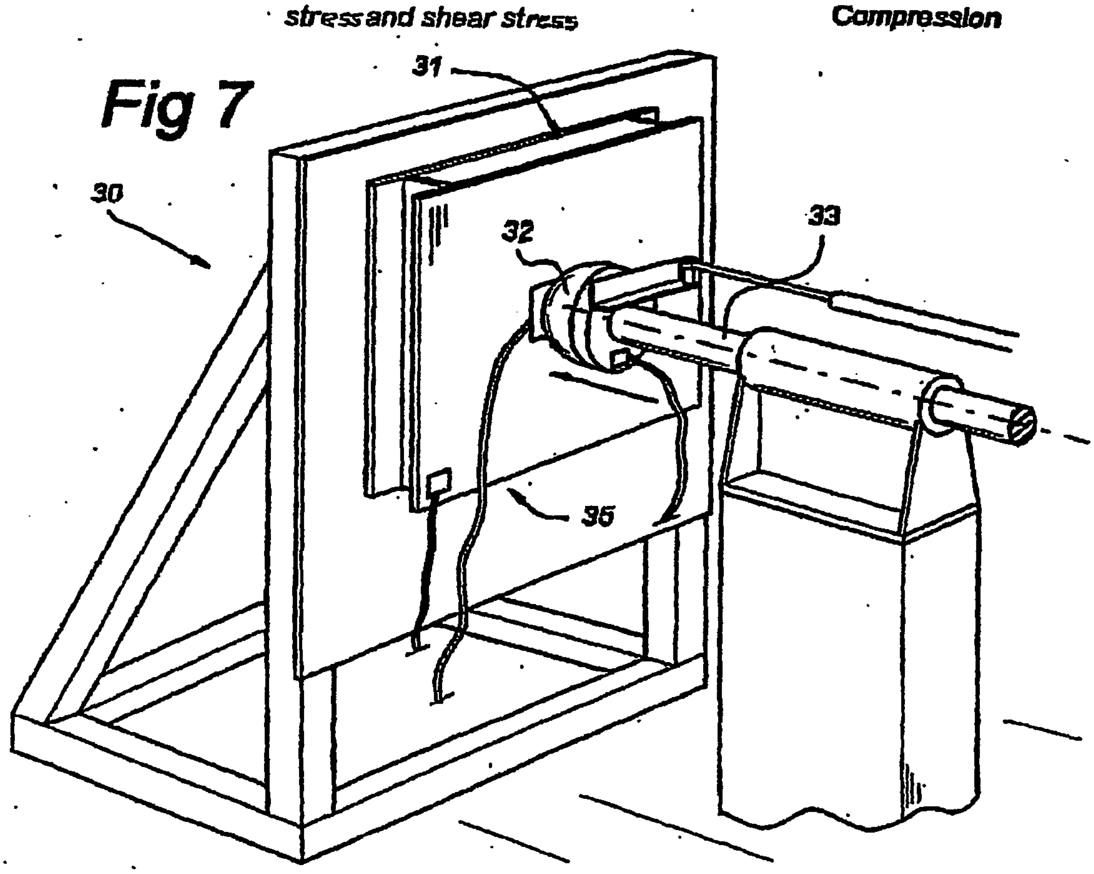

Fig 8

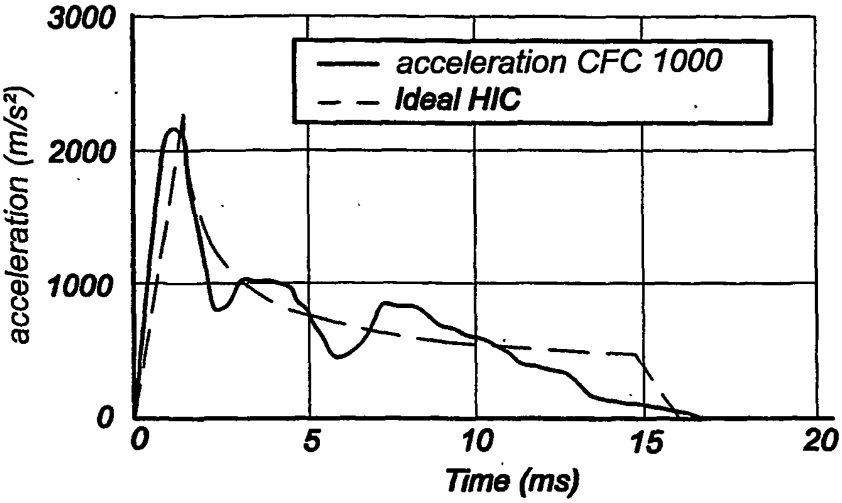
3000
2000
1000
0
acceleration (m/s²)
0
5
10
15
20
Time (ms)
acceleration CFC 1000
Ideal HIC

Fig 9a

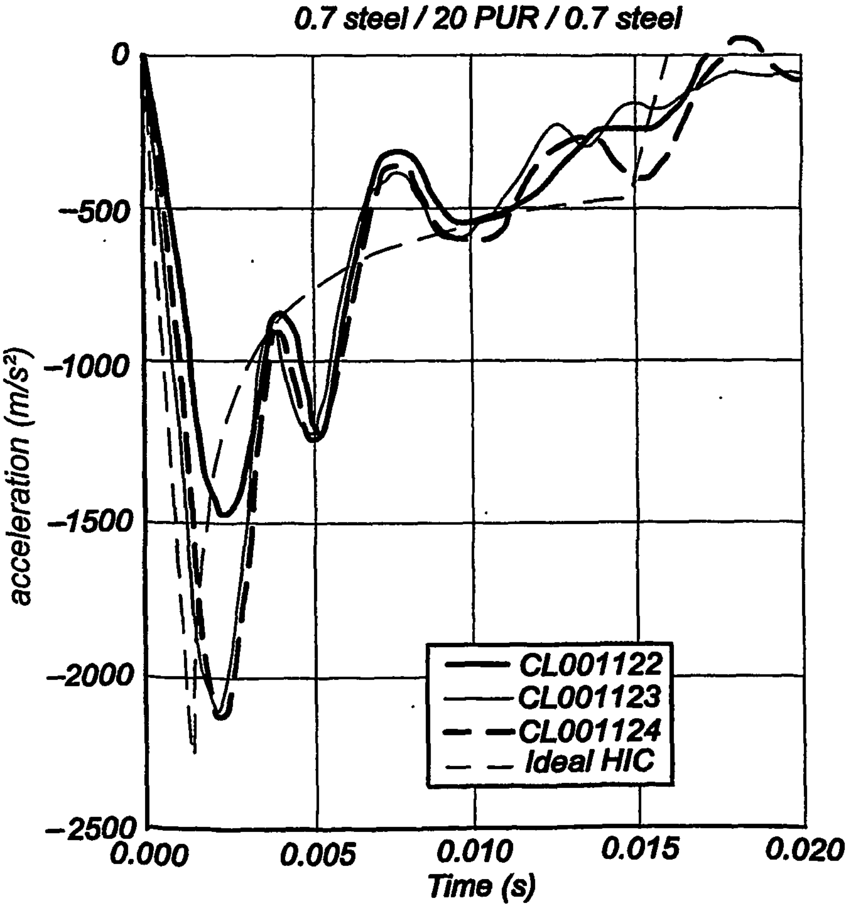
0.7 steel / 20 PUR / 0.7 steel
0
-500
-1000
-1500
-2000
-2500
acceleration (m/s²)
0.000
0.005
0.010
0.015
0.020
Time (s)
CL001122
CL001123
CL001124
Ideal HIC

Fig 9b

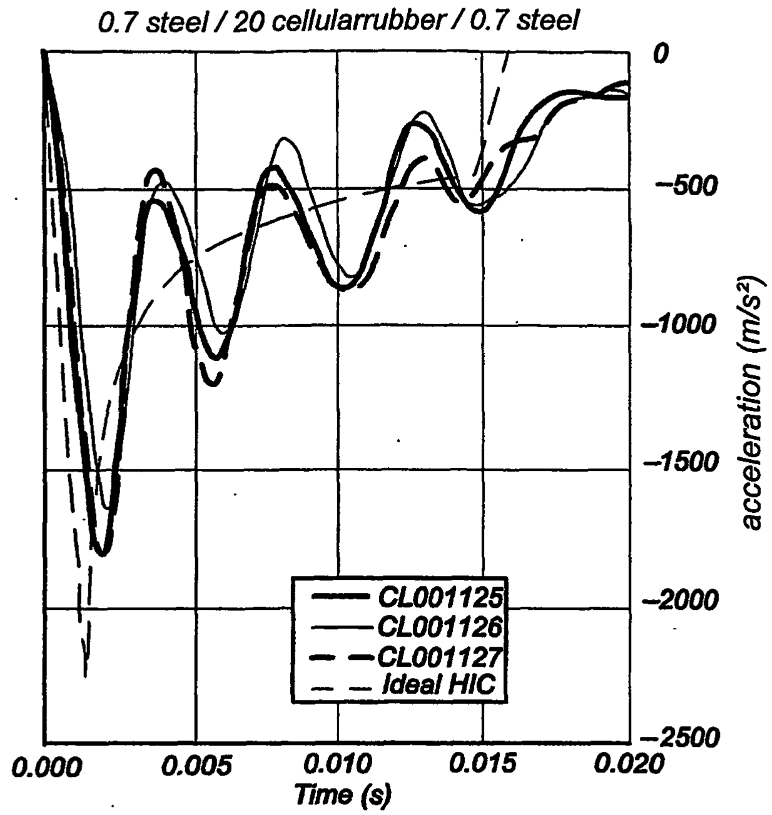
0.7 steel / 20 cellularrubber / 0.7 steel
0
-500
-1000
-1500
-2000
-2500
acceleration (m/s²)
0.000
0.005
0.010
0.015
0.020
Time (s)
CL001125
CL001126
CL001127
Ideal HIC

Fig 9c

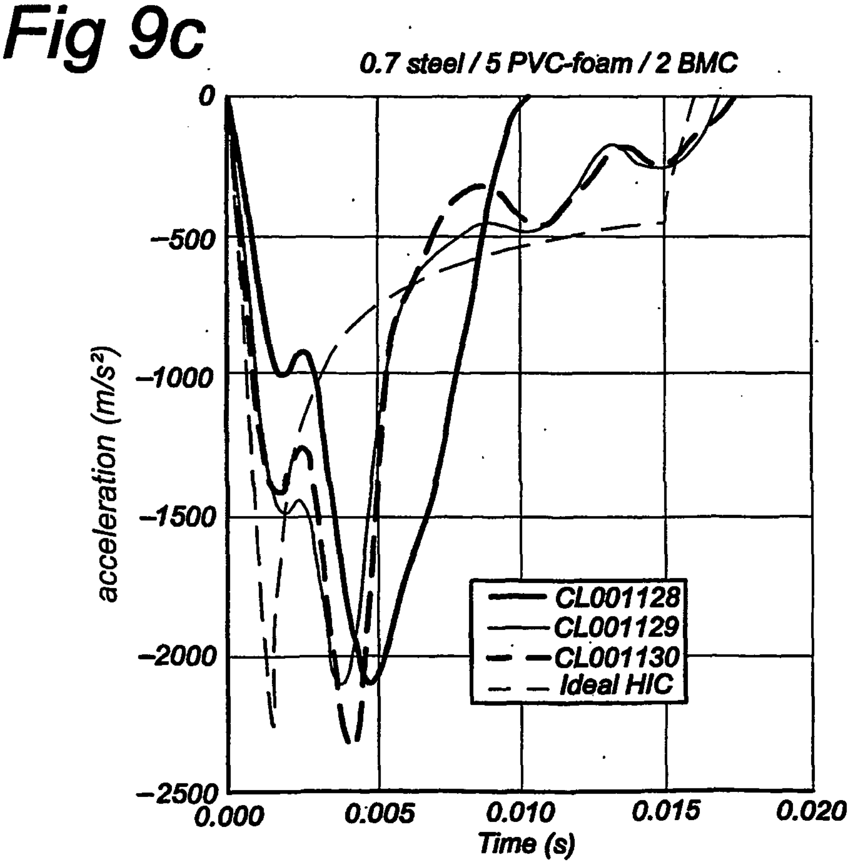
0.7 steel / 5 PVC-foam / 2 BMC
0
-500
-1000
-1500
-2000
-2500
acceleration (m/s²)
0.000
0.005
0.010
0.015
0.020
Time (s)
CL001128
CL001129
CL001130
Ideal HIC

# Fig 9d

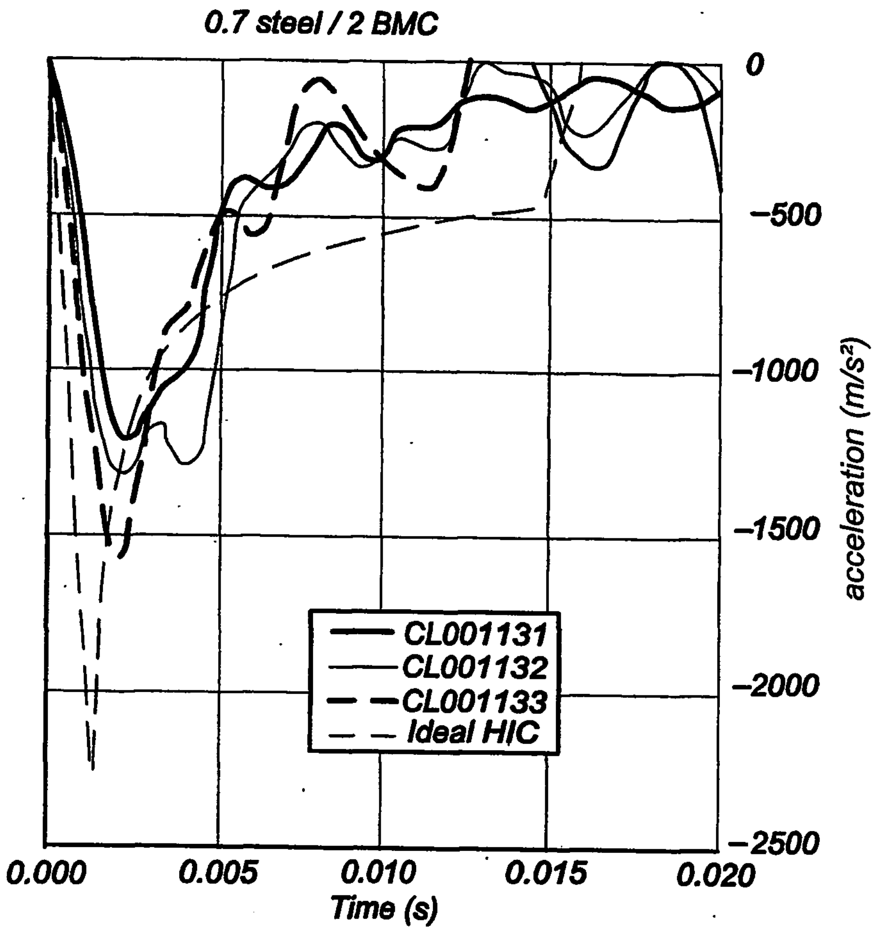
0.7 steel / 2 BMC
0
-500
-1000
-1500
-2000
-2500
acceleration (m/s²)
0.000
0.005
0.010
0.015
0.020
Time (s)
CL001131
CL001132
CL001133
Ideal HIC